# EUROPEAN PATENT APPLICATION

(11) **EP 4 287 549 A1**
(43) Date of publication of application: **06.12.2023**
(21) Application number: 22177241.1
(22) Date of filing: 03.06.2022
(51) Int. Cl.: H04L 9/00

(54) **PRIVACY-PRESERVING FUZZY STRING MATCHING**

(71) Applicant: Roseman Group B.V., 4817 KW Breda (NL)
(72) Inventor: BOUMAN, Niek Johannes, 4817 KW Breda (NL); VEENINGEN, Meilof Geert, 4817 KW Breda (NL); DE VREEDE, Niels, 4817 KW Breda (NL)
(74) Representative: DeltaPatents B.V.

(57) **Abstract**

The invention relates to a cryptographic system (010) for performing a fuzzy string matching in a privacy-preserving way as a cryptographic secure multi-party computation between multiple cryptographic devices. Input devices apply a string-to-vector model to input strings to obtain vector representations, and provides the vector representations as inputs to the multi-party computation. A cryptographic device obtains the vector representations as inputs to the multi-party computation and computes under the multi-party computation distances between the vector representations. The distance is used as an indicator of a fuzzy string matching between the input strings.

## Description

### FIELD OF THE INVENTION

The invention relates to a cryptographic system for performing a fuzzy string matching, to a corresponding computer-implemented method, and to an input device and a cryptographic device for use in such a system. The invention further relates to a computer-readable medium.

### BACKGROUND OF THE INVENTION

There is a growing demand for privacy enhancing technologies (PETs), i.e., data processing techniques that intrinsically protect the privacy of the data they operate on. For example, with the cryptographic technique of secure multiparty computation (MPC), multiple parties can perform a computation on their joint input using a distributed cryptographic protocol, such that each party learns nothing beyond the output of computation and his own (private) input.

One reason for the growing demand for PETs is that citizens are becoming increasingly dependent on the digital information stored about them by various companies and institutions. Because of this increasing dependence, the consequences of a breach of personal data are getting increasingly severe. And due to the worldwide surge of cybercrime and nation-state-sponsored cyber espionage, the risk of a data breach has increased sharply in recent years.

Also, data-based collaborations between separate entities (like companies, hospitals, local governments) usually implies that personal data is copied between the entities, which poses the risk of uncontrolled spreading of data, in particular personal information. PETs can enable data collaboration between entities without the need for sharing the data in cleartext form.

Another factor driving demand for PETs is the emergence of legal frameworks for data protection, such as the European GDPR and the Californian CCPA legislation, and their mandatory compliance. In the context of such frameworks, PETs are valuable as technical safeguards, and typically provide concrete instantiations of abstract legal notions.

To apply PETs in real-world systems, aspects related to the user should be considered. For example, a system for the privacy-preserving processing of text strings should be flexible enough to deal with spelling mistakes and variations, which commonly occur in names of persons, or may occur if the text strings are entered into the system by human hands. In such case, when comparing strings, computing a distance between strings, or performing 'fuzzy' string matching is preferred over exact string equality tests. Examples of applications involving texts containing spelling mistakes include database applications related to medical records, insurance, HR, and public sector.

A particular example application of fuzzy string matching is determining whether a given string (e.g., a name of a person) occurs on a blacklist in a way that is tolerant to spelling mistakes. In particular, consider the problem where a person is to be randomly drawn from a whitelist of names, where the name should not occur in a blacklist. This problem may be defined up to fuzzy matching of the names. Here, the whitelist and/or blacklist could in general contain contributions from one or more inputters.

US8271796B2 (APPARATUS FOR SECURE COMPUTATION OF STRING COMPARATORS) describes an apparatus which can be used so that one party learns the value of a string distance metric applied to a pair of strings, each of which is held by a different party, in such a way that none of the parties can learn anything else significant about the strings. This apparatus can be applied to the problem of linking records from different databases, where privacy and confidentiality concerns prohibit the sharing of records. The apparatus can compute two different string similarity metrics, including the bigram-based Dice coefficient and the Jaro-Winkler string comparator. The apparatus can implement a three-party protocol for the secure computation of the bigram-based Dice coefficient and a two-party protocols for the Jaro-Winkler string comparator which are secure against collusion and cheating. The apparatus implements a three party Jaro-Winkler string comparator computation which is secure in the case of semi-honest participants.

### SUMMARY OF THE INVENTION

It would be desirable to provide cryptographic techniques for privacy-preserving fuzzy string matching with improved computational efficiency.

In accordance with a first aspect of the invention, a cryptographic system for performing a fuzzy string matching and a corresponding computer-implemented method are provided, as defined by claims 1 and 14, respectively. In accordance with further aspects of the invention an input device and a cryptographic device for use in such a system are provided, as defined by claims 12 and 13, respectively. In accordance with an aspect of the invention, a computer-readable medium is described as defined by claim 15.

Various measures discussed herein relate to performing a fuzzy string matching. A first input string may be provided by a first input device and a second input string may be provided by a second input device. The outcome of the fuzzy string matching may be an indicator of the fuzzy string matching between the first and second input strings. The indicator may indicate an extent to which the strings are similar to each other, e.g., an extent to which the first and second strings are misspellings of each other, e.g., different spellings of the same name. The determined indicator may be output to the first and/or second device or to another device, or may be used in a further computation without any party learning the value of the indicator, for example.

Interestingly, the fuzzy string matching may be performed in a privacy-preserving way as a cryptographic secure multi-party computation (MPC). As is known per se, MPC is a cryptographic technique in which a computation is performed in a distributed way between multiple cryptographic devices in such a way that the inputs, intermediate values, and outputs of the computation remain hidden from the parties performing the computation. An input party that provides an input string for which the matching is determined, can be one of the cryptographic devices, but this is not necessary. Depending on the specific technique used, MPC may ensure privacy and/or correctness of the computation against an attacker that eavesdrops or controls one or more (but typically not all) of the cryptographic devices. By using MPC, the fuzzy string matching may be performed in such a way that, apart from the outputting of the determined indicator, none of the parties involved learn information about the contents of the input strings. In particular, the fuzzy string matching may be performed such that the first input device does not learn the second input string, the second input device does not learn the first input string, and no other device or entity learns either the first or the second input string.

As is known per se, in principle, any computation can be performed in a privacy-preserving way using MPC. In particular, an existing fuzzy string matching technique may be implemented under MPC by letting the input devices input their input strings, and applying an MPC-based implementation of the fuzzy string matching technique. However, unfortunately, the overhead of performing a computation under MPC depends to a large degree on specifics of the computation, and in particular, on a degree of branching that the original computation has. Since existing fuzzy string matching techniques tend to involve a significant amount of branching, implementing them under multi-party computation may incur a large overhead, making the use of such techniques infeasible in practice.

Interestingly, however, the inventors devised a particularly efficient cryptographic protocol for performing a fuzzy string matching using MPC. The protocol uses a string-to-vector model. This is a model that is configured to determine a vector representation of a string. The vector may be a numerical vector, e.g., of integers or real numbers. The length of the vector may be fixed independently of the input string. Such a vector representation may be referred to as a word embedding. The string-to-vector model may be a model trained to determine vector representations using machine learning and/or a based on a statistical model. A known type of such a model is a word2vec model, for example, the fasttext model by Facebook.

As the inventors realized, the distance between the vector representations of the input strings can be used as an indicator of the fuzzy string matching between the first and second strings. In particular, the inventors observed that, for names of persons, the distances between vector representations of spelling variations of the same name, tend to be smaller than distances between vector representations of different names. This is true in particular if the string-to-vector model is trained to differentiate between different names and spelling variations of the same name, but interestingly, the inventors observed that the same is also true for string-to-vector models that have not been trained in this way. For example, the word2vec model was originally trained to represent semantic similarity. However, the inventors realized that this model works well as an indicator of fuzzy string matching as well.

A second realization made by the inventors is that it is possible to compute the distance between such vector representations of input strings under multi-party computation particularly efficiently. In particular, instead of letting the input devices provide the input strings as input to the MPC, the input devices may instead determine the vector representations of the input strings according to the string-to-vector model outside of the computation, and provide the vector representations as inputs. The cryptographic devices can then compute the distance between the representations without needing to apply the string-to-vector model under MPC.

This provides a very efficient way of performing the fuzzy string matching that was found in practice to provide a sufficiently accurate indicator of the fuzzy string matching. In particular, in various embodiments, the multi-party computation can be a constant-round multi-party computation, meaning that the number of rounds of communication (namely, the number of times a party sends a response to an input provided by another party) does not depend on the size of the input strings, or even of the vector representations.

In an embodiment, the multiple cryptographic devices may be further configured to compute, under MPC, a comparison between the distance and a threshold. For example, the distance may not be output to any party but instead by used only for comparison against the threshold. For example, the comparison output may indicate whether the input strings are determined to be alternative spellings of the same input (e.g., name of a person), or different inputs. The comparison output can for example be output to a device, or used in a further computation. By comparing against a threshold, a strong guarantee may be provided about the degree of information leakage about the input strings that the outcome of the fuzzy string matching provides, namely, the fuzzy string matching may provide exactly one bit of information about the input strings.

In an embodiment, the threshold against which the distance is compared, may be calibrated based on computed different-string and same-string differences. One or more of the input devices may be configured to access multiple calibration input strings and to apply the string-to-vector model to compute such different-string distances between different calibration input strings, and such same-string distances between calibration input strings and perturbations thereof. For example, one of the input devices may perform the calibration, determine the threshold, and provide the threshold to the cryptographic devices as a non-secret value or as an input to the multi-party computation. Or, multiple devices may determine different-string and same-string differences, and the threshold may be determined based on the determined differences as a multi-party computation.

In any case, by performing the calibration, it may be ensured that the threshold accurately reflects the decision boundary between different-string and same-string differences. Moreover, the threshold can be determined in a privacy-preserving way without the need to collect the input strings of the respective input devices in one place.

In an embodiment, the multiple cryptographic devices may be configured to compute the distance between the first and second vector representations based on a scalar product between the vectors. The scalar product is a good choice for the distance, because it can be computed efficiently using MPC. In particular, the scalar product is a particularly good choice when the inputs to the scalar product are secret-shared according to a multiplicative linear secret sharing scheme, such as Shamir secret sharing or replicated secret sharing. In such a case, the scalar product may be computed using an amount of communication that is small and independent of the length of the vectors.

For example, the string-to-vector model may have been previously trained to output larger distances between different input strings than between input strings and perturbations thereof. For example, this training can be done by one of the input devices. This way, the model can be optimized to result in the most accurate indicator of fuzzy string matching. However, this is not needed. For example, known word2vec models have not been trained based on perturbations but based on semantic similarity, and have not even been trained to optimize a scalar product per se, but the scalar product was still found to be a good indicator of fuzzy string matching.

In an embodiment, the fuzzy string matching can be used to compute a set operation (e.g., intersection, union, or set difference) between a first set of input strings and a second set of input strings. In particular, known techniques for computing the set operation can be applied that use a comparison between strings as a subroutine, where a comparison between respective input strings is implemented as a fuzzy string matching of the respective vector representations. This way, various set operations can be implemented particularly efficiently in a fuzzy way.

In an embodiment, for a given candidate input string, respective distances may be computed to respective check input strings from a check list. Interestingly, this can be implemented particularly efficiently because the respective distances may be computed at least in part in parallel. These respective computed distances are useful for various applications. In particular, respective comparisons may be determined between the respective computed distances and a threshold, and, based on the respective comparisons, a check output may be determined indicating if the candidate input string occurs in the check list. The check output may be determined under MPC such that, apart from possibly this check output, no information leaks from the MPC except whether the candidate input string occurs in the check list. This way, privacy of the comparison between the candidate string and the check list is greatly improved compared for example to hash-based approaches, while at the same time the matching is tolerant to small variations.

In an embodiment, multiple candidate input strings of the input devices together form a candidate list. Respective candidate input strings can be compared to the check list. For example, check outputs may be iteratively determined for respective candidate input strings of the candidate list until a given number of candidate input strings are determined not to occur in the check list. This way, a desired number of candidate input strings may be drawn from the candidate list (e.g., a whitelist) that do not occur in the check list (e.g., a blacklist).

In particular, the candidate list may be randomly permuted under MPC prior to determining the check outputs. In this case, a desired number of candidate input strings may be drawn randomly from the candidate list by determining if respective candidate input strings occur in the checklist, where the check output indicating this can be determined as a public output of the multi-party computation, e.g., an output that may be learned by the cryptographic devices. This way, the cryptographic devices can determine based on the public output whether a desired number of candidate input strings have been determined, and it can thus be prevented to needlessly compare further candidate input strings. At the same time, the public output may not leak information concerning which particular candidate input string was selected because of the shuffling of the candidate list.

As another example of comparing a candidate list against a check list, it may be determined under MPC whether all candidate input strings of the candidate list do not occur in the check list. For example, the MPC may output just whether or not all candidate input strings are safe (int the sense of not occurring on the check list), without leaking additional information. Various other possible comparison outputs are also possible.

In an embodiment, an input string may be determined from a first name and a last name of a person by appending the last name to the first name, and/or by appending the first name to the last name. For example, one of the two options can be chosen for performing the fuzzy matching, or the fuzzy matching can be performed for both options and the results combined to obtain a fuzzy matching tolerant to swapping the first and last names. As another example, the string-to-vector model may be applied word-wise to the input string, e.g., to the first and last names, and the resulting vector representations may be combined to obtain the vector representation of the input string. Also in this way, a fuzzy matching of strings that contain multiple words can be obtained.

It will be appreciated by those skilled in the art that two or more of the above-mentioned embodiments, implementations, and/or optional aspects of the invention may be combined in any way deemed useful.

Modifications and variations of any system and/or any computer readable medium, which correspond to the described modifications and variations of a corresponding computer-implemented method, can be carried out by a person skilled in the art on the basis of the present description, and the other way round as well.

### BRIEF DESCRIPTION OF THE DRAWINGS

These and other aspects of the invention will be apparent from and elucidated further with reference to the embodiments described by way of example in the following description and with reference to the accompanying drawings, in which:
Fig. 1 shows an input device;
Fig. 2 shows a cryptographic device;
Fig. 3 shows a cryptographic system;
Fig. 4 shows a detailed example of how to perform a fuzzy string matching in a privacy-preserving way;
Fig. 5 shows a detailed example of how to perform fuzzy string matchings between respective sets of strings;
Fig. 6 shows a computer-implemented method of performing a fuzzy string matching;
Fig. 7 shows a computer-readable medium comprising data.

It should be noted that the figures are purely diagrammatic and not drawn to scale. In the figures, elements which correspond to elements already described may have the same reference numerals.

### DETAILED DESCRIPTION OF EMBODIMENTS

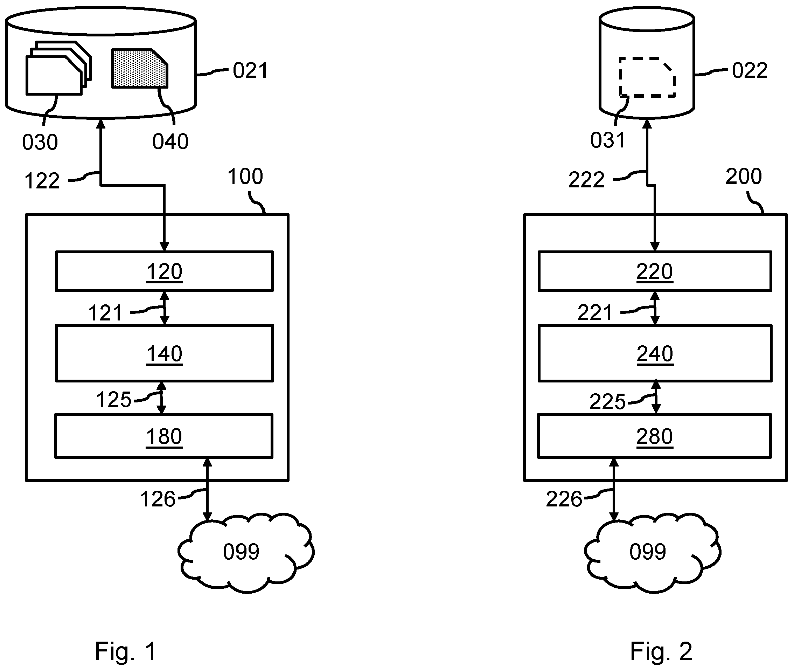

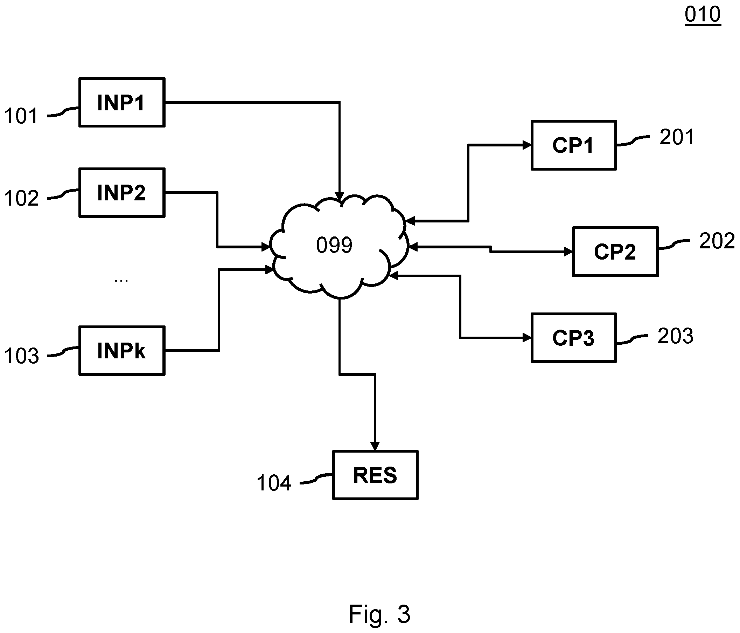

Fig. 1 shows an input device 100 for use in a cryptographic system as described herein, e.g., according to Fig. 3. The cryptographic system may be for performing a fuzzy string matching. The fuzzy string matching may be performed in a privacy-preserving way as a cryptographic secure multi-party computation between multiple cryptographic devices (not shown).

The device 100 may comprise a data interface for accessing a data interface 120 for accessing data 040 representing a string-to-vector model. The string-to-vector model may be configured to determine a vector representation of a string. The string-to-vector model may be a trained model, e.g., a word2vec model. For example, the string-to-vector model may have at least 1000, at least 10000, or at least 100000 trainable parameters. As illustrated, the data interface 120 may be further for accessing one or more input strings 030 to which a fuzzy string matching is to be applied. For example, one or more of the input strings may be comprised in a candidate list and/or one or more of the input strings may be comprised in a check list as described herein. For example, the number of input strings may be at least 10, at least 100, or at least 1000.

For example, as also illustrated in Fig. 1, the input interface may be constituted by a data storage interface 120 which may access the data 030, 040 from a data storage 021. For example, the data storage interface 120 may be a memory interface or a persistent storage interface, e.g., a hard disk or an SSD interface, but also a personal, local or wide area network interface such as a Bluetooth, Zigbee or Wi-Fi interface or an ethernet or fibreoptic interface. The data storage 021 may be an internal data storage of the system 100, such as a hard drive or SSD, but also an external data storage, e.g., a network-accessible data storage. In some embodiments, the data 030, 040 may each be accessed from or distributed across different data storages, e.g., via a different subsystem of the data storage interface 120. Each subsystem may be of a type as is described above for data storage interface 120.

The system 100 may further comprise a processor subsystem 140 which may be configured to, during operation of the system 100, apply the string-to-vector model 040 to an input string to obtain a vector representation of an input string 030; and provide the vector representation of the input string as an input to the multi-party computation between the multiple cryptographic devices. The input device 100 may perform the multi-party computation in addition to providing inputs to it, e.g., input device 100 may be combined with the cryptographic device of Fig. 2. The input device 100 may optionally further obtain an output of the multi-party computation from the cryptographic device(s), e.g., a computed distance or an output based on it, e.g., based on comparing the distance to a threshold.

The system 100 may also comprise a communication interface 180 configured for communication 126 with at least one of the cryptographic devices, e.g., for providing one or more input to and/or receiving one or more outputs of the multi-party computation. Communication interface 180 may internally communicate with processor subsystem 140 via data communication 125. Communication interface 180 may be arranged for direct communication with the other devices, e.g., using USB, IEEE 1394, or similar interfaces. As illustrated in the figure, communication interface 180 may also communicate over a computer network 099, for example, a wireless personal area network, an internet, an intranet, a LAN, a WLAN, etc. For instance, communication interface 180 may comprise a connector, e.g., a wireless connector, an Ethernet connector, a Wi-Fi, 4G or 4G antenna, a ZigBee chip, etc., as appropriate for the computer network. Communication interface 180 may be an internal communication interface, e.g., a bus, an API, a storage interface, etc.

**Fig. 2** shows a cryptographic device 200 for use in a cryptographic system as described herein, e.g., in Fig. 3. The cryptographic system may be for performing a fuzzy string matching. The fuzzy string matching may be performed in a privacy-preserving way as a cryptographic secure multi-party computation between a set of multiple cryptographic devices, including device 200.

The cryptographic device 200 may comprise a data interface 220. The data interface may be for accessing data 031 representing first and second vector representations of a first and second input string as secret values of the multi-party computation, e.g., as secret-shares or similar. As illustrated by the dashed box in the figure, interestingly, the data 031 does not allow the cryptographic device 200 to determine the vector representations or the input strings themselves. For example, as also illustrated in Fig. 2, the data interface may be constituted by a data storage interface 220 which may access the data 031 from a data storage 022. In general, the data interface 220 and the data storage 022 may be of a same type as described with reference to Fig. 1 for the data interface 120 and the data storage 021.

The device 200 may further comprise a processor subsystem 240 which may be configured to, during operation of the system 200, obtain a first and second vector representation of a first and second input string as respective inputs to the multi-party computation from a first and second input device. Processor subsystem 240 may be further configured to compute under the multi-party computation a distance between the first and second vector representations. The distance may be used as an indicator of a fuzzy string matching between the first and second input strings. Processor subsystem 240 may be further configured to provide an output of the multi-party based on the computed distance. For example, the output may be provided to an input device, to a result device, to a further cryptographic device, or to a user or other software running on the cryptographic device 200 itself. Device 200 may act as an input device, e.g., one of the vector representations (but typically not both) may be provided by device 200 as an input of the MPC.

It will be appreciated that the same considerations and implementation options apply for the processor subsystem 240 as for the processor subsystem 140 of Fig. 1. It will be further appreciated that the same considerations and implementation options may in general apply to the system 200 as for the system 100 of Fig. 1, unless otherwise noted.

The device 200 may further comprise a communication interface 280 configured for communication as needed for the MPC, e.g., communication with at least one further cryptographic device of the cryptographic system. Communication interface 280 may be as described for communication interface 180 of Fig. 1.

In general, each device described in this specification, including but not limited to the system 100 of Fig. 1 and the system 200 of Fig. 2, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers.

**Fig. 3** shows a cryptographic system 010 for performing a fuzzy string matching. The fuzzy string matching may be performed in a privacy-preserving way as a cryptographic secure multi-party computation between multiple cryptographic devices. The cryptographic system may in general comprise multiple different input devices, multiple different cryptographic devices, and at least one result device, where the sets of input, cryptographic, and result devices may overlap with each other. As illustrated, the devices typically communicate over a computer network 099, e.g., the internet or a local network.

In particular, shown in the figure are three cryptographic devices **CP1,** 201; **CP2,** 202; and **CP3,** 203. The cryptographic devices may be based on cryptographic device 200 of Fig. 2. The number of cryptographic devices that is used may vary depending on the particular technique used for the multi-party computation and the security properties which are desired. For example, the number of cryptographic devices **CPi** can be two, three, or more.

The cryptographic devices **CPi** may be configured to perform a secure multi-party computation (also known per se as multi-party computation, secure computation, or MPC). Generally, a multi-party computation may be a distributed protocol between the cryptographic devices for performing a computation in a privacy-preserving way. As known per se, any computation can be performed as a multi-party computation (in other words, "under the multi-party computation"), but concrete computational and communication efficiency can in general greatly depend on how exactly the computation is performed.

In particular, the multi-party computation can be performed based on one of the following techniques:
- based on secret sharing, in particular arithmetic secret sharing such as Shamir secret sharing, replicated secret sharing, or additive secret sharing. For example, the multi-party computation can be based on the techniques described in Shamir, "How to Share a Secret", Communications ACM, 1979; Ben-Or, Goldwasser, Wigderson, "Completeness Theorems for Non-Cryptographic Fault-Tolerant Distributed Computation (Extended Abstract)", Proceedings of the 20th Annual ACM Symposium on Theory of Computing, 1988; Chaum, Crepeau, Damgaard, "Multiparty Unconditionally Secure Protocols (Extended Abstract)", Proceedings of the 20th Annual ACM Symposium on Theory of Computing, 1988; Ito, Saito, Nishizeki, "Secret sharing scheme realizing general access structure", Electronics and Communications in Japan (Part III: Fundamental Electronic Science), 1989; Damgaard, Pastro, Smart, Zakarias, "Multiparty Computation from Somewhat Homomorphic Encryption", proceedings CRYPTO 2012;
- based on garbled circuits, e.g., see Yao, "Protocols for Secure Computations (Extended Abstract)", 23rd Annual Symposium on Foundations of Computer Science, Chicago, 1982;
- based on oblivious transfer, e.g., see Goldreich, Micali, Wigderson, "How to Play any Mental Game or A Completeness Theorem for Protocols with Honest Majority", Proceedings of the 19th Annual ACM Symposium on Theory of Computing, 1987;
- based on threshold homomorphic encryption, e.g., see Cramer, Damgaard, Nielsen, "Multiparty Computation from Threshold Homomorphic Encryption", proceedings EUROCRYPT 2001;
- based on any combination of the above, e.g., see Demmler, Schneider, Zohner, "ABY - A Framework for Efficient Mixed-Protocol Secure Two-Party Computation", proceedings NDSS 2015.

Also shown in the figure are a number of input devices **INP1,** 101; **INP2,** 102; up to **INPk,** 103. The input devices may input strings for which a fuzzy string matching is to be performed. The input devices 101-103 may be based on input device 100 of Fig. 1. The number of input devices can be two, at most or at least three, or at most or at least five, for example. In many cases, the sets of inputs devices **INPi** and cryptographic devices CPi may partially overlap. For example, the set of input devices may be a subset or a superset of the set of cryptographic devices, or may be exactly the same.

An input device **INPi** may be configured to access data representing a string-to-vector model. The string-to-vector model may be configured to determine a vector representation of a string. The multiple input devices **INPi** my use the same string-to-vector model. The input device **INPi** may be configured to apply the string-to-vector model to an input string to obtain a vector representation of the input string. The input device **INPi** may be further configured to provide the vector representation of the input string as an input to the multi-party computation between the multiple cryptographic devices **CPi,** e.g., by secret-sharing the respective elements of the vector representation among the devices **CPi.**

A cryptographic device **CPi** may be configured obtain a first and second vector representation of a first and second input string as respective inputs to the multi-party computation, from a first and second input device **INPi, INPj** that are typically different from each other. The cryptographic device **CPi** may be further configured to compute, under the multi-party computation, a distance between the first and second vector representations. The distance may be used as an indicator of a fuzzy string matching between the first and second input strings.

Further shown is a result device **RES.** The result device **RES** may obtain a result of the MPC based a computed distance between vector representations of input strings, e.g., by receiving secret-shares of the result from the respective cryptographic devices **CPi** and recombining the secret-shares to obtain the result. The result can for example be the computed distance itself, a comparison of the distance with a threshold, or another derived output, examples of which are provided herein. It is also possible for multiple respective result devices to obtain multiple respective results of the multi-party computation based on one or more computed distances. Although illustrated as a separate device in the figure, the result device(s) **RES** can be the same devices as an input device **INPi** and/or cryptographic device **CPi.** Generally, the result device may be implemented as discussed for an input device with respect to Fig. 1.

Many known multi-party computation techniques are specified primarily for the case where the input and result devices **INPi** and **RES** form a subset of the set of cryptographic devices **CPi.** In case an input and/or result device is not a cryptographic device itself, such techniques can be used for example by letting an input device secret-share an input among the computation devices. Similarly, a result device can for example receive secret-shares of an output from the computation devices and recombine the received shares. Techniques are known per se for letting an external party provide inputs to and/or obtain outputs from a multi-party computation. For example, the techniques from the following reference can be used: T. P. Jakobsen, J. B. Nielsen, and C. Orlandi. "A framework for outsourcing of secure computation", proceedings CCSW14.

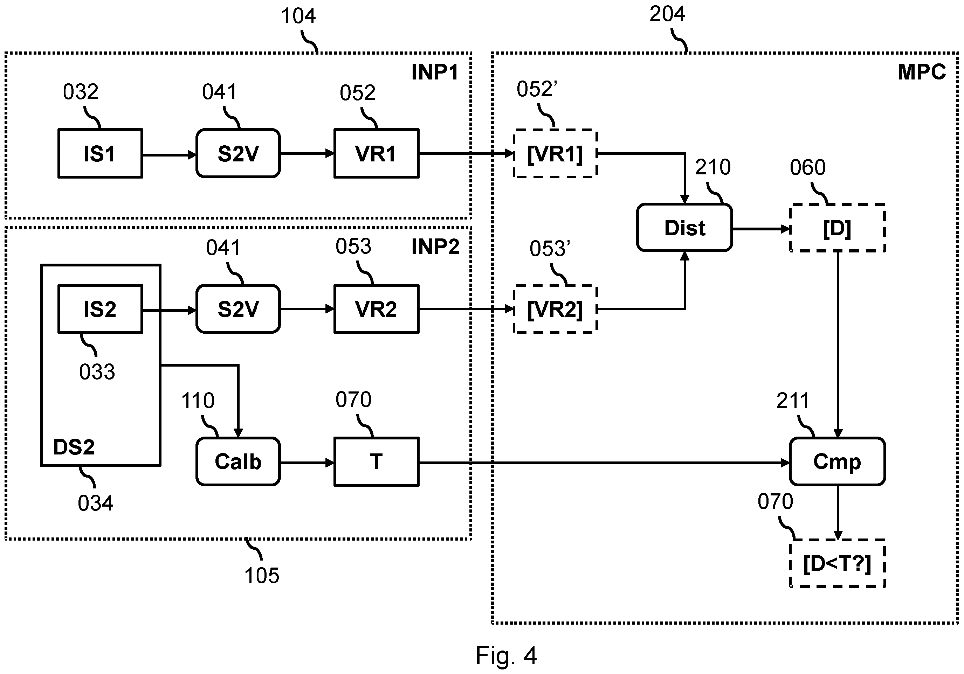

**Fig. 4** shows a detailed, yet non-limiting, example of how to perform a fuzzy string matching in a privacy-preserving way, for example, by the system of Fig. 3.

Shown in the figure are two input devices **INP1,** 104 and **INP2,** 105, e.g., as illustrated w.r.t. Fig. 1. The input devices both store respective input strings **IS1,** 032; **IS2,** 033, of which a fuzzy string matching may be performed. In various embodiments, the input strings **ISi** represent names of natural persons.

In order to perform the fuzzy string matching, the input devices **INP1, INP2** may apply a string-to-vector model **S2V,** 041, to their respective input strings **IS1, IS2.** The string-to-vector model **S2V** may be configured to determine a vector representation of a string. Thus, the input devices may determine respective vector representations **VR1,** 052; **VR2,** 053, of the respective input strings. Interestingly, the multiple input devices **INPi** may use the same string-to-vector model, **S2V,** e.g., the same trainable model may be applied using the same trained parameters. The vector **VRi** that is output by model **S2V** can e.g. have at most or at least 100, at most or at least 300, or at most or at least 500 elements.

Generally, any appropriate string-to-vector model **S2V** can be used. Such a model is also known as word embedding. For example, the model can be a word2vec model, e.g., fastText or any other string-to-vector model known per se. For example, a pretrained string-to-vector model may be used as available in the art per se, or the string-to-vector model may be trained by one or more of the input devices, as also described elsewhere. Generally, the string-to-vector model **S2V** may be such given the input strings, output vectors are determined such that that distance between the output vectors is representative of the similarity of the input strings.

It is possible to deal with input strings **ISi** that contain multiple words in various ways. In some cases, the string-to-vector model **S2V** may support strings containing multiple words. In other cases, the multiple words of a string may be concatenated, e.g., spaces may be removed. For example, an input string may be obtained by combining a first and last name of a person, e.g., by appending the last name to the first name or the other way round. It is also possible to apply the string-to-vector model **S2V** word-wise to the input string **ISi,** and combine the resulting vector representations to obtain the vector representation **VRi** of the input string **ISi.**

Further shown is a multi-party computation MPC, 204, carried out between multiple cryptographic devices, e.g., as illustrated w.r.t. Fig. 2. One or both of the input devices **INPi** can be cryptographic devices that participate in the multi-party computation **MPC,** but this is not needed, e.g., one or both input devices can be further devices of the cryptographic system separate from the cryptographic devices. Using the multi-party computation **MPC,** the fuzzy string matching may be performed in a privacy-preserving way, e.g., the input strings **ISi** and their vector representations **VRi** may not leak as a result of performing the fuzzy string matching, at least under the security assumptions of the multi-party computation.

As illustrated, the input devices may provide the respective vector representations **VRi** as inputs to the multi-party computation **MPC.** Accordingly, the vector representations may be obtained by the cryptographic devices as secret values **[VR1],** 052', **[VR2],** 053', of the multi-party computation **MPC.** An input to the multi-party computation is here meant to be a private input. In particular, such a secret value may be distributed among the cryptographic devices, e.g., secret-shared, such that no single cryptographic device may be able to derive the vector representations **VRi** themselves from their distributed representations **[VRi]**, although all cryptographic devices may be able to derive the vector representations. Such secret values of the multi-party computation are illustrated in the figure as dashed boxes and labelled with square brackets.

In particular, providing a vector representation **VRi** as input to the multi-party computation **MPC** may comprise representing elements of the vector representation as values suitable for the applied multi-party computation technique. For example, multi-party computation based on a finite algebraic structure, such as a finite ring or field, may be used. In such a case, an element of the vector **VRi** may be embedded in the finite algebraic structure by scaling and rounding to a nearest integer. For example, an element of the vector may be represented as a fixed-point number, e.g., by multiplying with a power of two 2*^{k}* and rounding. For example, k can be at most or at least 8, at most or at least 10, or at most or at least 12. Using such a fixed-point representation is particularly convenient for computing scalar products.

Under the multi-party computation **MPC**, in a distance-computing operation **Dist,** 210, a distance **[D],** 060, may be computed between the first and second vector representations **[VRi].** The distance **[D]** may be used as an indicator of a fuzzy string matching between the first and second input strings **IS1, IS2**. As illustrated in the figure, the distance **[D]** may be determined as a secret value, e.g., no cryptographic device may learn the distance. For example, the distance may be used to derive an output of the multi-party computation. It is also possible to determine the distance as a public output of the multi-party computation, e.g., the cryptographic devices may learn the distance, if so desired.

Generally, various distance metrices may be applied in the distance computation **Dist.** It is known per se how to perform many computations under multi-party computation, allowing a wide range of distance metrics to be implemented. A particularly beneficial choice is to use a distance based on a scalar product, for example, to use a L2 norm or a squared L2 norm. For example, when using a *k*-bit fixed-point representations 2*^{k}* · *v* of elements of the input vectors, the squared L2 norm can use the products with a 2*k*-bit fixed point representation 2²*^{k} · v'* without the need to truncate least significant bits.

Generally, a scalar product can be implemented efficiently using multi-party computation techniques based on finite fields or rings. A particularly beneficial choice is to use a multi-party computation technique **MPC** based on a multiplicative linear secret sharing scheme. In this case, a scalar product may be implemented particularly efficiently, e.g., using an amount of communication between the cryptographic devices that is independent from the length of the vectors **VRi.** The term "multiplicative linear secret sharing scheme" may be interpreted as defined in R. Cramer et al., "General Secure Multi-Party Computation from any Linear Secret-Sharing Scheme", proceedings EUROCRYPT 2000 (incorporated herein by reference insofar as the definition of this term is concerned), and includes at least Shamir secret sharing and replicated secret sharing. In particular, the secret sharing scheme may be strongly multiplicative as defined in the above paper.

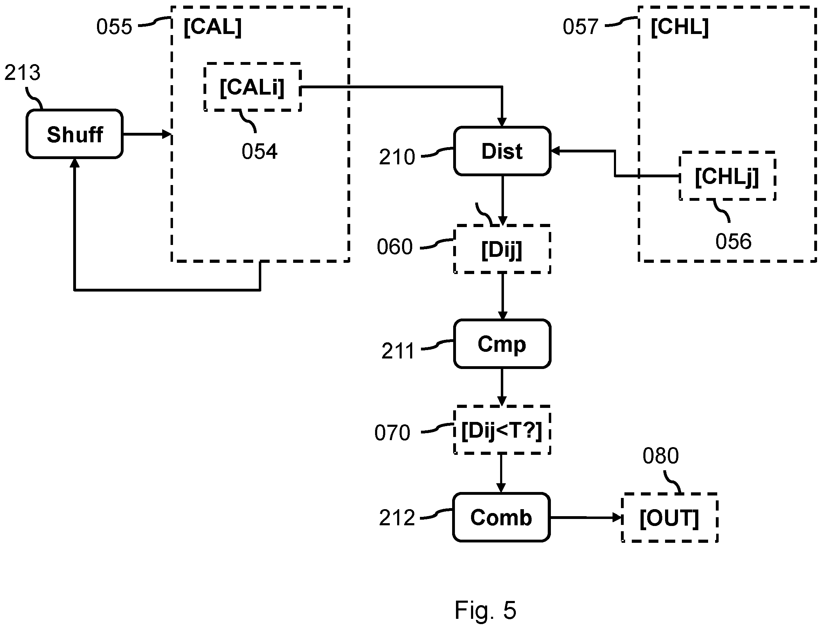

As illustrated in the figure, optionally, in a comparison operation **Cmp**, 211, the computed distance **[D]** may be compared under the multi-party computation **MPC** with a threshold T, 070. The threshold can be a secret value of the multi-party computation, e.g., an input of one of the input parties, but it can also be a public value known to the cryptographic devices. The result **[D<T?]**, 070, of the comparison **Cmp** can for example be a binary value indicating whether the distance is smaller than the threshold. The result can for example be output to the input parties or a different result party, or used in a follow-up computation (e.g., see Fig. 5). Secure comparison techniques under multi-party computation are known per se and can be applied herein. The threshold **T** may be selected such that variations of the same input string generally result in distances **[D]** below the threshold **T** and different input strings generally result in distances **[D]** above the threshold **T**. The particular threshold, and the false-positive and false negative rates associated to it, generally depend on the application at hand.

As illustrated in the figure, the threshold **T** against which the distance **[D]** is compared, may be calibrated based on a dataset **DS2**, 034, of calibration input strings. The figure illustrates the calibration being performed by the party providing the second input string **IS2**. The input string **IS2** is in this case included in the calibration dataset **DS2**. This is not needed, but in general, applying the calibration to the same input strings on which the fuzzy matching is performed, helps to derive a more representative threshold. More generally, the calibration may be performed by one or more input or cryptographic devices that may or may not provide input strings for fuzzy string matching themselves.

The calibration may be performed in a calibration operation **Calb,** 110. The calibration may comprise applying the string-to-vector model **S2V** to compute different-string distances between different calibration input strings from dataset **DS2**; and same-string distances between calibration input strings from dataset **DS2** and perturbations thereof. The perturbations may be generated based on expected fuzzy matches that the threshold may be configured to support, e.g., by generating a number of edit operations based on a maximal edit distance from the input string. In particular, similar word-pairs may be generated by selecting, e.g., randomly, a word from the dataset **DS2** together with its perturbed version, where the perturbation may be randomly chosen from a family of possible perturbations that appropriately model typical spelling mistakes.

The threshold may be calibrated based on the computed different-string and same-string distances. For example, a a distribution distances according to the model **S2V** and according to the distance metric applied by operation **Dist,** may be determined, for the "similar" and "different" word pair sets. Given those two distributions, the threshold **T**, e.g., a value between 0 and 1, may be determined, e.g., based on desired type I and type II errors of the decision regions defined by the threshold T, e.g., in the Neyman-Pearson sense. The desired errors generally depend on application at hand.

In case a single party, e.g., a single input device **INP2** performs the calibration, the party may provide the threshold **T** to the cryptographic devices, e.g., as an input to the multi-party computation **MPC**, or as a public value. In case multiple parties perform the calibration, the threshold may be determined based on their respective same-string and different-string distances, e.g., using the multi-party computation **MPC**. For example, the respective parties may determine respective thresholds and input them to the multi-party computation, and the respective thresholds may be combined into an overall threshold **T** (which may be output from the MPC or kept secret) according to a combination rule. The combination rule can for example be an average, a median, a minimum, a maximum, etc, and can also be based on further inputs of the respective parties performing the calibration indicating the accuracy of their respective thresholds, e.g., a size of the dataset on which it is based, a variance, or another accuracy metric.

Although string-to-vector-model **S2V** can be pre-trained, e.g., a word2vec model as available per se, it is also possible to train the **S2V** model specifically for the purpose of fuzzy string matching. To this end, the model may be trained to output larger distances between different input strings than between input strings and perturbations thereof, for example based on a loss function that penalizes large differences for input strings and perturbations and that penalizes small differences for different input strings.

Preferably, the model is trained on the same distance metric that is used in operation **Dist**, although it was found that this is not strictly needed. In particular, it is also possible to use a pre-trained model that was not trained based on the same distance metric that is applied in the **Dist** operation. It is not even needed that the string-to-vector model is trained specifically on the same type of strings that it is applied to. For example, existing word2vec models were found to work on input strings representing names of natural persons.

**Fig. 5** shows a detailed, yet non-limiting, example of how to perform fuzzy string matchings between respective sets of strings. This example may be based on the example of Fig. 4, and may in particular involve performing a fuzzy string matching as a secure multi-party computation, as discussed with respect to that figure. As in Fig. 4, square brackets and dashed boxes are used to represent secret values (e.g., inputs or intermediate values) of the multi-party computation.

Shown in the figure is a candidate list **[CAL]**, 055, comprising one or more candidate input strings **[CALi]**, 054. For example, the number of candidate input strings may be at most or at least 100, at most or at least 1000, or at most or at least 10000. As shown in the figure, the candidate input strings may be input into the multi-party computation in the sense that vector representations according to a string-to-vector model are provided as input, as discussed with respect to Fig. 4. Items **[CALi]** may represent respective vector representations provided as input to the multi-party computation. The respective candidate input strings **[CALi]** may be input to the multi-party computation may input by one or more input devices, e.g., by one device, at least two devices, or at least five devices.

Also shown in the figure is a check list **[CHL]**, 057, comprising one or more check input strings **[CHLi]**, 056. For example, the number of check input strings may be at most or at least 10, at most or at least 100, or at most or at least 1000. Similarly to the candidate input strings, also for the check input strings, vector representations **[CHLi]** may be provided as input to the multi-party computation. The items of the check list may be provided by a single input device, by at most or at least two devices, or at most or at least three devices.

As illustrated in the figure, respective distances **[Dij]**, 060, may be computed in distance computation operation **Dist**, e.g., as in Fig. 4, for a candidate input string **[CALi]** and the respective check input strings **[CHLj]** of the check list **[CHL]**.

The distances **[Dij]** may be used in various ways. In particular, as in Fig. 4, the respective distances **[Dij]** may be compared **Cmp**, 211 against a threshold to obtain comparison outputs **[Dij<T?]**. Interestingly, the respective distances **[Dij]** and/or comparison outputs **[Dij<T?]** may be computed at least in part in parallel.

The comparison outputs **[Dij<T?]** may be combined in a combination operation **Comb**, to determine a check output **[OUT]** indicating if the candidate input string **[CALi]** occurs in the check list **[CHL]**.

In the figure, the comparison **Cmp** and the combination **Comb** are performed under multi-party computation, which is advantageous from a data minimization perspective, although it is also possible to perform the combination **Comb** and possibly the comparison **Cmp** outside of the multi-party computation, based on the multi-party computation's outputs.

The check output **[OUT]** can again be provided as an input by the multi-party computation, but can also be further processed under multi-party computation.

In particular, it is possible to iteratively determine check outputs **[OUT]** for respective candidate input strings **[CALi]** of the candidate list **[CAL]** until a given number of candidate input strings are determined not to occur in the check list **[CHL].** For example, the candidate list may be a whitelist and the checklist may be a blacklist, so that this way, a number of items may be selected from the whitelist that do not occur in the blacklist.

As illustrated in the figure, optionally, the candidate list **[CAL]** may be randomly permuted under the multi-party computation in a shuffle operation **Shuff**, 213, prior to determining the check outputs **[OUT]**. Performing a random permutation under multi-party computation is known per se and is also sometimes referred to as a secret shuffle. Interestingly, shuffling **Shuff** enables to determine the check outputs **[OUT]** for the shuffled candidate list **[CAL]** as public outputs of the multi-party computation, and in particular, the cryptographic devices performing the multi-party computation may obtain the check outputs in the plain. The cryptographic devices can use this information to determine which items from the candidate list **[CAL]** to select and/or when a desired number of items has been selected. For example, for these items, the vector representation itself, an index in the unshuffled candidate list, or another output identifying the selected item may be output, e.g., to a party providing the candidate list **[CAL]**. Interestingly, due to the shuffling, opening the check outputs **[OUT]** may not reveal, in particular not to the cryptographic devices or to the party providing the check list, which candidate items were selected.

As another example of using the check outputs **[OUT]**, it is also possible to determine, e.g., under multi-party computation, if all candidate input strings of the candidate list **[CAL]** do not occur in the check list **[CHL]**, for example.

This is illustrated in more detail in an example below. In this example, a first party has a list of names **[CAL]** and operates a first input device. This list can be relatively big, e.g., at least 1000 or at least 10000 entries. Second and third parties have blacklists together forming check list **[CHL]** and operate respective second and third input devices. These latter lists can be relatively small, e.g., in total at most 5% or at most 10% of the blacklist, e.g., at most 10 or at most 50 items in total. In this particular example, a multi-party computation is performed between these three input devices acting as cryptographic devices (but it is equally possible for the input devices to outsource this computation to a partially or non-overlapping set of cryptographic devices).

In this example, the parties securely shuffle the candidate list **[CAL]**. The second and third parties input, e.g., secret-share, list data in joint blacklist **[CHL]** as follows. The input parties clean the input names, e.g., by removing commas and extra whitespaces, e.g. 'John, Doe' => 'John Doe'. The input parties compute vector representations for the respective names, and embed word vectors into vectors over a finite field used by the multi-party computation, resulting in a finite-field vector per person name. The input parties provide the vectors as input to the multi-party computation, e.g., by secret-sharing them. A random selection of names from the candidate list **[CAL]** not occurring in the blacklist **[CHL]** is made by greedily checking for respective list-entries **[CALi]** (e.g., starting at the top of the list) of the candidate list **[CAL]** whether the entry occurs in the blacklist **[CHL]**, until a desired number of names have been collected.

This is illustrated in the following pseudocode:

| |
|---|
| ```
 def upload_whitelist(P: whitelist): // party P uploads a whitelist [CAL]
  [W] = {}
  for each name in whitelist:
    party P do: // party P preprocesses and applies string-to-vector model
       formatted := make_lower_case(remove_spaces(name))
       vec := word2vec(formatted)
       reverse_name_lookup[hash(vec)] = name
    [vec_shared] = secret_share(P: vec) // party P provides vector repr. as MPC input
    append_to([T], [vec_shared])
``` |
| ```
  [W_permuted] := permute_rows([T]) // parties randomly permute candidate list [CAL]
  return [W_permuted]
  def upload_blacklist([B], P: blacklist): // party P uploads contribution to blacklist [CHL]
  for each name in blacklist:
    party P do: // party P preprocesses and applies string-to-vector model
       formatted := make_lower_case(remove_spaces(name))
       vec := word2vec(formatted)
    [vec_shared] = secret_share(P: vec) // party P provides vector repr. as MPC input
    append_to([B], [vec_shared])
    def are_similar([query_name], [forbidden_name]): // distance is indicator of fuzzy matching
  [dot] := inner_product([query_name], [forbidden_name]) // compute distance
  [cmp] := [dot] >= THRESHOLD // compare distance to threshold
  return [cmp]
  def entry_occurs_in_blacklist([blacklist], [query_name]): // det. check output [OUT]
  [score] := 0
  for [forbidden_name] in [blacklist]:
    [score] += are_similar([query_name], [forbidden_name]) // respective comparisons
   cmp := [score] == 0 // check output indicates if candidate occurs in check list
   return not cmp
   // main
   [W_permuted]=upload_whitelist(P: whitelist) // one party uploads whitelist
   [B]={}
   for party Pj do:
  upload_blacklist([B], Pj: blacklistj) // respective parties upload blacklist contributions
  indices {}
  for i in len([W_permuted]): // iteratively determine check outputs
  if (!entry_occurs_in_blacklist([B], [W_permuted(i)])) // not in check list
    indices.append(i) // select candidate
    if \|indices\|==desired_size: break //until given number of condidate input strings
    party P do: // input device providing whitelist gets selected candidates
``` |
| ```
  names = {}
  for i in indices: w_i = open([W_permuted(i)])// provide vector repr as output to input device
  names.append(reverse_name_lookup[w_i]) //map vector repr to input name
  print(names)
``` |

The above is effectively an example where the candidate input strings form a first set of input strings **[CAL]** and the check input strings form a second set of input strings **[CHL]**, and wherein a set operation may be determined between the first set of input strings and the second set of input strings based on fuzzy string matchings **[Dij]**, **[Dij<T?]** between the first and second input strings. In particular, the above illustrates how a random selection may be made from the set difference **[CAL]\[CHL]**, or how the full set difference may be determined. More generally, various set operations may be implemented based on the described fuzzy string matching, e.g., a union, an intersection, a set difference. The set operations can also be applied to more than two sets, e.g., a union or intersection between two sets, a union between a first set and a difference between a second and third set, etc. Generally, such set operations may be implemented by using an existing algorithm that performs equality checks, preferably a data-oblivious algorithm; and using fuzzy matching **[Dij<T?]** as proposed herein to implement the equality check. This is demonstrated for a set intersection below, which can operate as a regular set intersection by providing as eq_test_function a regular private equality check, and as a set intersection with fuzzy string matching by providing as eq_test_function the fuzzy string matching as described herein:

| |
|---|
| ```
 def test_membership([S], [x], eq_test_function):// set membership with given equality check
  [is_member] = False
  for [element] in [S]:
    [b] = eq_test_function([element], [x]):
    [is_member] = [is_member] or [b]
  return [is_member]
  def intersect([A], [B], eq_test_function): //set intersection with given equality check
  // e.g. oblivious set of "Private and Oblivious Set and Multiset Operations" by Blanton et al.
  [C] = oblivious_set()
  for [element] in [A]:
    [m] = test_membership([B], [element], eq_test_function)
    C.oblivious_add([m], [element])
  return [C]
``` |

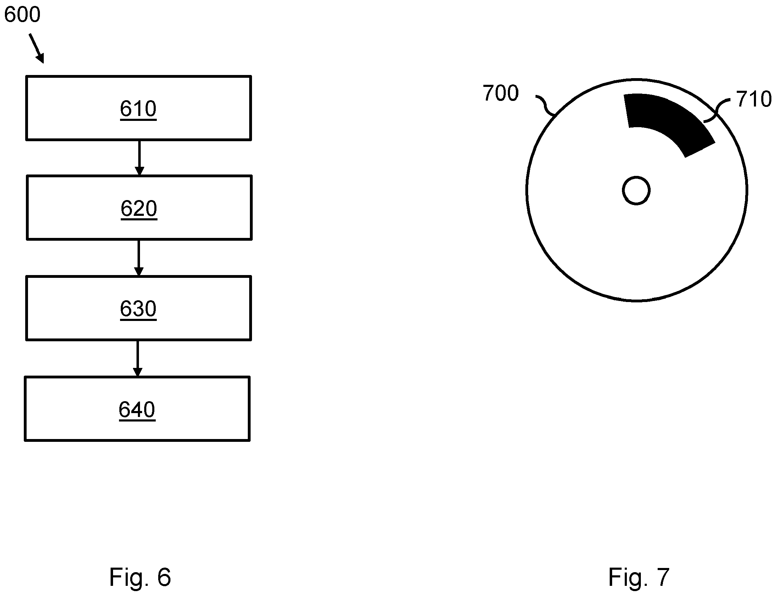

**Fig. 6** shows a block-diagram of a cryptographic method 600 of performing a fuzzy string matching. The method may be computer-implemented. The method 600 may correspond to an operation of the system 010 of Fig. 3. However, this is not a limitation, in that the method 600 may also be performed using another system, apparatus or device.

The method 600 may comprise, in an operation titled "ACCESS S2V MODEL", accessing 610 data representing a string-to-vector model. The string-to-vector model may be configured to determine a vector representation of a string.

The method 600 may comprise, in an operation titled "APPLY S2V MODEL", applying 620 the string-to-vector model to a first and second input string to obtain first and second vector representations of the first and second input string, respectively.

The method 600 may comprise, in an operation titled "INPUT VECTORS TO MPC", providing 630 the first and second vector representations as inputs to the multi-party computation.

The method 600 may comprise, in an operation titled "COMPUTE DISTANCE UNDER MPC", computing 640 under the multi-party computation a distance between the first and second vector representations. The distance may be used as an indicator of a fuzzy string matching between the first and second input strings.

It will be appreciated that, in general, the operations of method 600 of Fig. 6 may be performed in any suitable order, e.g., consecutively, simultaneously, or a combination thereof, subject to, where applicable, a particular order being necessitated, e.g., by input/output relations.

The method(s) may be implemented on a computer as a computer implemented method, as dedicated hardware, or as a combination of both. As also illustrated in **Fig. 7****,** instructions for the computer, e.g., executable code, may be stored on a computer readable medium 700, e.g., in the form of a series 710 of machine-readable physical marks and/or as a series of elements having different electrical, e.g., magnetic, or optical properties or values. The medium 700 may be transitory or non-transitory. Examples of computer readable mediums include memory devices, optical storage devices, integrated circuits, servers, online software, etc. Fig. 7 shows an optical disc 700.

The instructions may be instructions for one or more particular devices of the cryptographic system. In particular, the instructions may comprise instructions for an input device to access data representing a string-to-vector model, wherein the string-to-vector model is configured to determine a vector representation of a string, wherein the multiple input devices use the same string-to-vector model; apply the string-to-vector model to an input string to obtain a vector representation of the input string; and provide the vector representation of the input string as an input to the multi-party computation between the multiple cryptographic devices. Instead or in addition, the instructions may comprise instructions for a cryptographic device to obtain a first and second vector representation of a first and second input string as respective inputs to the multi-party computation from a first and second input device; and compute under the multi-party computation a distance between the first and second vector representations, wherein the distance is used as an indicator of a fuzzy string matching between the first and second input strings.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A cryptographic system (010) for performing a fuzzy string matching, wherein the fuzzy string matching is performed in a privacy-preserving way as a cryptographic secure multi-party computation between multiple cryptographic devices (200,201-203), wherein the system comprises:
- multiple input devices (100,101-103), wherein an input device is a cryptographic device or a further device of the system, wherein an input device is configured to:
- access data representing a string-to-vector model, wherein the string-to-vector model is configured to determine a vector representation of a string, wherein the multiple input devices use the same string-to-vector model;
- apply the string-to-vector model to an input string to obtain a vector representation of the input string;
- provide the vector representation of the input string as an input to the multi-party computation between the multiple cryptographic devices;
- the multiple cryptographic devices, wherein a cryptographic device configured to:
- obtain a first and second vector representation of a first and second input string as respective inputs to the multi-party computation from a first and second input device;
- compute under the multi-party computation a distance between the first and second vector representations, wherein the distance is used as an indicator of a fuzzy string matching between the first and second input strings.

2. The system (010) of claim 1, wherein the multiple cryptographic devices are further configured to compute under the multi-party computation a comparison between the distance and a threshold.

3. The system (010) of claim 2, wherein one or more input devices are configured to: access multiple calibration input strings and apply the string-to-vector model to compute different-string distances between different calibration input strings and same-string distances between calibration input strings and perturbations thereof; wherein the threshold is calibrated based on the computed different-string and same-string distances.

4. The system (010) of any preceding claim, wherein the multiple cryptographic devices are configured to compute the distance based on a scalar product between the first and second vector representations, and wherein the multi-party computation uses a multiplicative linear secret sharing scheme.

5. The system (010) of any preceding claim, wherein an input device is configured to train the string-to-vector model to output larger distances between different input strings than between input strings and perturbations thereof.

6. The system (010) of any preceding claim, wherein multiple first input strings form a first set of input strings and multiple second input strings form a second set of input strings, and wherein multiple cryptographic devices are configured to compute under the multi-party computation a set operation between the first set of input strings and the second set of input strings based on fuzzy string matchings between the first and second input strings.

7. The system (010) of any preceding claim, wherein multiple check input strings of the input devices together form a check list, and wherein the multiple cryptographic devices are configured to compute respective distances for a candidate input string of an input device and the respective check input strings of the check list under the multi-party computation.

8. The system (010) of claim 7, wherein the multiple cryptographic devices are configured to compute under the multi-party computation:
- respective comparisons between the respective computed distances and a threshold, and
- based on the respective comparisons, a check output indicating if the candidate input string occurs in the check list.

9. The system (010) of claim 8, wherein multiple candidate input strings of the input devices together form a candidate list, and wherein the multiple cryptographic devices are configured to:
- iteratively determine check outputs for respective candidate input strings of the candidate list until a given number of candidate input strings are determined not to occur in the check list, and/or
- determine if all candidate input strings of the candidate list do not occur in the check list.

10. The system (010) of claim 9, wherein the multiple cryptographic devices are configured to randomly permute the candidate list under the multi-party computation prior to determining the check outputs, and to determine the check outputs for the shuffled candidate list as public outputs of the multi-party computation.

11. The system (010) of any preceding claim, wherein the input device is configured to:
- determine the input string by appending a last name of a person to a first name of a person, and/or appending the first name to the last name, and/or
- apply the string-to-vector model word-wise to the input string and combine the resulting vector representations to obtain the vector representation of the input string.

12. An input device (100,101-103) for use in the cryptographic system according to any one of claims 1-11, wherein the cryptographic system is for performing a fuzzy string matching, wherein the fuzzy string matching is performed in a privacy-preserving way as a cryptographic secure multi-party computation between multiple cryptographic devices, wherein the input device comprises:
- a data interface (120) for accessing data representing a string-to-vector model, wherein the string-to-vector model is configured to determine a vector representation of a string;
- a communication interface (180) configured for communication with at least one of the cryptographic devices of the cryptographic system;
- a processor subsystem (140) configured to:
- apply the string-to-vector model to an input string to obtain a vector representation of the input string; and
- provide the vector representation of the input string as an input to the multi-party computation between the multiple cryptographic devices.

13. A cryptographic device (200,201-203) for use in the system according to any one of claims 1-11, wherein the cryptographic system is for performing a fuzzy string matching, wherein the fuzzy string matching is performed in a privacy-preserving way as a cryptographic secure multi-party computation between multiple cryptographic devices comprising the cryptographic device, wherein the cryptographic device comprises:
- a communication interface (280) configured for communication with at least one further cryptographic device of the cryptographic system.
- a processor subsystem (240) configured to:
- obtain a first and second vector representation of a first and second input string as respective inputs to the multi-party computation from a first and second input device;
- compute under the multi-party computation a distance between the first and second vector representations, wherein the distance is used as an indicator of a fuzzy string matching between the first and second input strings.

14. A cryptographic method (600) of performing a fuzzy string matching, wherein the fuzzy string matching is performed in a privacy-preserving way as a cryptographic secure multi-party computation, wherein the method comprises:
- accessing (610) data representing a string-to-vector model, wherein the string-to-vector model is configured to determine a vector representation of a string;
- applying (620) the string-to-vector model to a first and second input string to obtain first and second vector representations of the first and second input string, respectively;
- providing (630) the first and second vector representations as inputs to the multi-party computation;
- computing (640) under the multi-party computation a distance between the first and second vector representations, wherein the distance is used as an indicator of a fuzzy string matching between the first and second input strings.

15. A transitory or non-transitory computer-readable medium (700) comprising data (710) representing instructions which, when executed by a processor system, cause the processor system to perform a method of performing a fuzzy string matching, wherein the fuzzy string matching is performed in a privacy-preserving way as a cryptographic secure multi-party computation between multiple cryptographic devices, wherein the method comprises:
- accessing data representing a string-to-vector model, wherein the string-to-vector model is configured to determine a vector representation of a string, wherein the multiple input devices use the same string-to-vector model; applying the string-to-vector model to an input string to obtain a vector representation of the input string; and providing the vector representation of the input string as an input to the multi-party computation between the multiple cryptographic devices; and/or
- obtaining a first and second vector representation of a first and second input string as respective inputs to the multi-party computation from a first and second input device; and computing under the multi-party computation a distance between the first and second vector representations, wherein the distance is used as an indicator of a fuzzy string matching between the first and second input strings.
